(19) Europäisches Patentamt
European Patent Office
Office européen des brevets

(11) **EP 3 714 962 B1**

(12) **EUROPÄISCHE PATENTSCHRIFT**

(45) Veröffentlichungstag und Bekanntmachung des Hinweises auf die Patenterteilung:
**15.12.2021   Patentblatt 2021/50**

(51) Int Cl.:
*B01D 53/26* *(2006.01)*  *F04D 27/00* *(2006.01)*
*F04C 18/16* *(2006.01)*

(21) Anmeldenummer: **19166237.8**

(22) Anmeldetag: **29.03.2019**

(54) **DRUCKLUFTSTATION**

COMPRESSED AIR STATION

STATION D'AIRE COMPRIMÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.09.2020   Patentblatt 2020/40**

(73) Patentinhaber: **Kaeser Kompressoren SE**
**96450 Coburg (DE)**

(72) Erfinder:
• **Schneider, Phil Andre**
  **96450 Coburg (DE)**
• **Kobelt, Klaus-Ulrich**
  **96450 Coburg (DE)**

(74) Vertreter: **Zech, Stefan Markus**
**Meissner Bolte Patentanwälte**
**Rechtsanwälte Partnerschaft mbB**
**Postfach 86 06 24**
**81633 München (DE)**

(56) Entgegenhaltungen:
**DE-A1-102014 000 541    JP-A- H03 178 314**
**US-A1- 2004 244 393    US-A1- 2010 232 980**

**Beschreibung**

Die Erfindung betrifft eine Druckluftstation umfassend mindestens zwei Abwärme liefernde Druckluftkomponenten, wobei die jeweilige Druckluftkomponente entweder als Verdichter, insbesondere als Schraubenkompressor, oder als Kältetrockner ausgebildet ist, sowie mindestens einen Abluftkanal zur Ableitung von Abwärme aus einem Raum. Ein Druckluft-Kältetrockner ist in DE 10 2014 000541 A1 offenbart.

Innerhalb des Kältetrockners ist ein Druckluft-Kältemittel-Wärmetauscher vorgesehen, in dem die Druckluft über ein in einem Kältefluidkreislauf geführtes Kältefluid gekühlt wird, wobei der Kältefluidkreislauf einen Kältefluid-Verdichter, einen Kondensator, ein Expansionsventil und den Druckluft-Kältemittel-Wärmetauscher umfasst.

Die von dem oder den Verdichtern produzierte Abwärme wird herkömmlicherweise bereits über ein oder mehrere Abluftkanäle aus einem Betriebsraum, in dem die Druckluftkomponenten aufgestellt sind, abgeleitet. Bei Kältetrocknern, die im Vergleich zu den innerhalb einer Druckluftstation vorhandenen Verdichtern meist ein geringeres Maß an Abwärme produzieren, wurde die Abwärme herkömmlicherweise entweder in den Betriebsraum eingeleitet oder über über den Kältetrocknern angeordnete Absaughutzen abgeführt. Gerade bei der Ableitung der Abwärme des oder der Kältetrockner in den Betriebsraum oder auch bei einer nur unvollständigen Abführung über eine über dem Kältetrockner angeordnete Absaughutze stellt sich jedoch das Problem, dass sich die Umgebungsluft im Betriebsraum erwärmt und die Effizienz sowohl der Verdichter, insbesondere der Schraubenkompressoren und auch der Kältetrockner sinkt.

Die Aufgabe der vorliegenden Erfindung besteht demgegenüber darin, eine Druckluftstation bzw. ein entsprechendes Verfahren vorzuschlagen, bei dem eine verbesserte Abführung von Abwärme auch eines in der Druckluftstation vorhandenen Kältetrockners aus einem Betriebsraum ermöglicht wird.

Diese Aufgabe wird in vorrichtungstechnischer Hinsicht mit einer Druckluftstation mit den Merkmalen des Anspruchs 1 und in verfahrenstechnischer Hinsicht mit einem Verfahren zum Ansteuern eines drehzahlgeregelten Lüftermotors eines Lüfters eines Kältetrockners nach den Merkmalen des Anspruchs 9 gelöst. Vorteilhafte Weiterbildungen sind in den Unteransprüchen angegeben.

In vorrichtungstechnischer Hinsicht zeichnet sich die Druckluftstation dadurch aus, dass sie weiterhin einen Trockner-Abluftkanal umfasst, der zur Ableitung eines durch den Kältetrockner geführten Kühlluftstroms vom Kältetrockner vorgesehen ist und einen Kühlluftauslass des Kältetrockners mit einem Kältetrockneranschluss am Abluftkanal verbindet, wobei der Kältetrockner einen Lüfter mit einem drehzahlregelbaren Lüftermotor aufweist und der Lüfter zur Förderung des Kühlluftstroms auch gegen einen aktuell im Abluftkanal vorherrschenden Gegendruck ausgebildet ist, wobei der Kältetrockner eine Steuerung aufweist oder mit einer Steuerung zusammenwirkt, die dazu eingerichtet und ausgebildet ist, den Lüftermotor des Lüfters so zu steuern, dass der Lüfter den im Abluftkanal herrschenden Gegendruck ausgleicht, so dass ein vom Kühlluftstrom transportiertes Volumen pro Zeiteinheit unverändert bleibt.

In verfahrenstechnischer Hinsicht wird vorgeschlagen, dass der Lüftermotor eines Lüfters eines Kältetrockners innerhalb einer Druckluftstation angesteuert wird, um auch schwankenden Gegendruck innerhalb eines Abluftkanals, der auch von mindestens einer weiteren Druckluftkomponente beschickt wird, auszugleichen, wobei das Verfahren wie folgt ausgestaltet ist:

Verfahren zum Ansteuern eines drehzahlregelbaren Lüftermotors eines Lüfters eines Kältetrockners innerhalb einer Druckluftstation, wobei die Druckluftstation mindestens zwei Abwärme liefernde Druckluftkomponenten, wobei die jeweilige Druckluftkomponente entweder als Verdichter, insbesondere als Schraubenkompressor, oder als Kältetrockner ausgebildet ist, sowie mindestens einen Abluftkanal zur Ableitung von Abwärme aus einem Raum umfasst, wobei innerhalb des Kältetrockners ein Druckluft-Kältemittel-Wärmetauscher vorgesehen ist, in dem die Druckluft über ein in einem Kältefluidkreislauf geführtes Kältefluid gekühlt wird, wobei der Kältefluidkreislauf einen Kältefluid-Verdichter, einen Kondensator, ein Expansionsventil und den Druckluft-Kältemittel-Wärmetauscher umfasst, wobei die Druckluftstation weiterhin einen Trockner-Abluftkanal umfasst, der zur Ableitung eines durch den Kältetrockner geführten Kühlluftstroms vom Kältetrockner vorgesehen ist und einen Kühlluftauslass des Kältetrockners mit einem Kältetrockner-Anschluss am Abluftkanal verbindet, wobei der Kältetrockner einen Lüfter mit einem drehzahl regelbaren Lüftermotor aufweist und der Lüfter zur Förderung der Abluft auch gegen einen aktuell im Abluftkanal vorherrschenden Gegendruck ausgebildet ist, wobei der Kältetrockner eine Steuerung aufweist oder mit einer Steuerung zusammenwirkt, die den Lüftermotor des Lüfters so ansteuert, dass der Lüfter den im Abluftkanal herrschenden Gegendruck ausgleicht, so dass ein vom Kühlluftstrom pro Zeiteinheit transportiertes Volumen unverändert bleibt.

In einer bevorzugten Ausgestaltung umfasst das erfindungsgemäße Verfahren weiterhin noch die folgenden Schritte:

- Einlesen eines für den aktuellen Kondensationsdruck repräsentativen Wertes, der aktuell innerhalb des Kondensators vorherrscht,
- Berechnen einer aktuellen Kondensationstemperatur aus dem Wert des aktuellen Kondensationsdrucks,

- Einlesen eines für die Temperatur der Zuluft repräsentativen Werts, der eine Zulufttemperatur definiert,
- Berechnen eines Sollwerts für die Kondensationstemperatur in definierter Abhängigkeit der Zulufttemperatur und
- Ansteuern des Lüftermotors des Lüfters derart, dass die aktuelle Kondensationstemperatur dem Sollwert für die Kondensationstemperatur folgt.

Eine Kernüberlegung der vorliegenden Erfindung besteht darin, eine Regelung des Lüftermotors des Lüfters im Kältetrockner derart vorzunehmen, dass eine Restpressung des Abluftstroms vom Kältetrockner sich auf das Druckniveau eines gemeinsam mit mindestens einer weiteren Druckluftkomponente genutzten Abluftkanalsystems einstellt. Die Drehzahl des Lüftermotors des Lüfters wird insofern so verändert, dass die Abluftmenge des Kältetrockners pro Zeiteinheit, mithin also der Kühlluftvolumenstrom des Kältetrockners, unabhängig vom aktuellen Gegendruck im Abluftkanal unverändert bleibt.

Insofern kann somit der Kondensationsdruck des Kältetrockners, und somit die Kälteleistung des Kältetrockners, unabhängig vom aktuellen Gegendruck auf gleichem Niveau gehalten werden, wobei eine Veränderung des Kondensationsdrucks bzw. der Kälteleistung nach anderen Kriterien möglich bleibt, der aktuell gegebene Gegendruck im Abluftkanal bzw. im Abluftkanalsystem jedoch ohne Einfluss auf den Kondensationsdruck bzw. die Kälteleistung des Kältetrockners gehalten wird. Unter einer aktuell gegebenen Restpressung wird dabei die aktuell gegebene Druckreserve des Lüfters zur Überwindung von zusätzlichen Strömungswiderständen, wie beispielsweise eines Abluftkanals verstanden. Die maximal erzielbare Restpressung des im Kältetrocker eingesetzten Lüfters ist dann als ausreichend anzusehen, wenn der Gegendruck, wie er sich aus der Wechselwirkung mit anderen Komponenten, wie einen angeschlossenen Schraubenkompressor sowie den zusätzlichen Strömungswiderständen, wie sie unter anderem in einem Abluftkanal üblicher Länge auftreten, ergibt, überwunden werden kann.

Obwohl hinsichtlich des Kältefluidkreislaufs von einem Kondensator einerseits und einem Expansionsventil andererseits die Rede ist, wird klargestellt, dass der Kältefluidkreislauf nicht zwangsläufig mit einem Phasenübergang von Gas-Flüssig Flüssig-Gas gefahren werden muss, sondern bei bestimmten Kältemitteln auch über transkritische Prozesse gearbeitet wird, wie beispielsweise bei $CO_2$ (R-744). Es gibt dann keine Verflüssigung, vielmehr wird Wärme auf der Hochdruckseite des Kältefluidkreislaufs abgegeben und die Gasphase beibehalten. Die Gaskühleraustrittstemperatur ist dann als äquivalenter Wert zur Kondensationstemperatur zu sehen.

Unter einem drehzahlregelbaren Lüftermotor im Sinne der Erfindung wird ein Lüftermotor verstanden, der hinsichtlich seiner Drehzahl eingestellt werden kann, insbesondere durch Frequenzumrichtung bzw. durch Phasenanschnitt.

Unter dem durch den Kältetrockner geführten Kühlluftstrom wird in der vorliegenden Anmeldung der Kühlluftstrom als solches bezeichnet. Sofern vom Kühlluftvolumenstrom die Rede ist, so soll damit der quantitative Wert als Volumenstrom, beispielsweise ausgedrückt in der Einheit m$^3$/s, also das vom Kühlluftstrom transportierte Volumen an Kühlluft pro Zeitspanne bezeichnet.

In einer bevorzugten Ausgestaltung weist der Kältetrockner einen Drucksensor zur Erfassung eines für den aktuellen Kondensationsdruck $p_{c,act}$ innerhalb des Kondensators repräsentativen Werts auf. Dabei weist der Kältetrockner eine Steuerung auf oder wirkt mit einer Steuerung zusammen, die dazu eingerichtet und ausgebildet ist, die Daten des Drucksensors zu erfassen und zu verarbeiten und über eine Regelung des Kondensationsdrucks auf einen Solldruck für den Kondensationsdruck $p_{c,soll}$ den Lüftermotor des Lüfters derart anzusteuern, dass unabhängig vom aktuellen Gegendruck im Abluftkanal ein vom Kühlluftvolumenstrom pro Zeiteinheit transportiertes Volumen unverändert bleibt.

Ebenfalls im Sinne der vorliegenden Erfindung wäre es, ergänzend oder zusätzlich zur Erfassung des aktuellen Kondensationsdruckes $p_c$, die Austrittstemperatur des Kältemittels aus dem Kondensator oder aus dem Gaskühler zu erfassen, da die Kondensationstemperatur direkt mit dem Kondensationsdruck korreliert und insofern beide Werte ineinander umgerechnet werden können.

In einer weiter bevorzugten Ausgestaltung ist vorgesehen, dass ein Schraubenkompressor und der Kältetrockner über eine Druckluftleitung miteinander verbunden sind und die Druckluftleitung dazu ausgebildet ist, die vom Schraubenkompressor ausgegebene Druckluft zu Trocknungszwecken an den Kältetrockner zu überführen, wobei ein Kühlluftauslass des Schraubenkompressors über einen Kompressoranschluss an den Abluftkanal angeschlossen ist, an den auch der Kältetrockner angeschlossen ist. In dieser möglichen Ausgestaltung fördern Schraubenkompressor und Kältetrockner ihre Abwärme über entsprechende Kühlluftauslässe an deselben Abluftkanal. Gleichzeitig wird die vom Schraubenkompressor abgegebene Druckluft zu Trocknungszwecken an den Kältetrockner überführt. Es ist aber auch denkbar, dass zwar die vom Schraubenkompressor erzeugte Druckluft an den Kältetrockner überführt wird, Schraubenkompressor und Kältetrockner jedoch ihre Abwärme an unterschiedliche Abluftkanäle abgeben.

In einer bevorzugten Ausgestaltung der vorliegend vorgeschlagenen Druckluftstation wirkt die Steuerung mit einem Umgebungsluftsensor, vorzugsweise einem Temperatursensor zusammen, um einen für den Zustand der Zuluft, insbesondere einen für die Zulufttemperatur repräsentativen Wert zu erfassen und an die Steuerung zu übermitteln.

In einer weiterhin bevorzugten Ausgestaltung ist der Lüfter des Kältetrockners als Radiallüfter ausgebildet. Zwar haben herkömmlich eingesetzte Axiallüfter im Nennpunkt eine niedrigere Leistungsaufnahme und erscheinen insoweit energetisch zunächst günstiger. Allerdings gilt dies vor allem im Zusammenhang mit herkömmlich eingesetzten Kältetrocknern, die ihre Abwärme unmittelbar in einen Betriebsraum, in dem sie aufgestellt sind, ausblasen. Zum unmittelbaren Anschluss an einen Abluftkanal bzw. an ein Abluftkanalsystem erscheinen Radiallüfter besser geeignet, da sie eine höhere Restpressung sicherstellen können.

In der hier vorgeschlagenen Druckluftstation können ein oder mehrere öleingespritzte Schraubenkompressoren und/oder ein oder mehrere ölfreie Verdichter zum Einsatz gelangen.

In einer möglichen Ausgestaltung der vorliegenden Erfindung sind an einem gemeinsamen Abluftkanal zwei oder mehr Schraubenkompressoren und/oder zwei oder mehr Kältetrockner angeschlossen. In einem derartigen genutzten gemeinsamen Abluftkanal können besonders große Druckschwankungen bzw. Druckunterschiede auftreten, so dass eine Regelung des Lüftermotors des Lüfters des Kältetrockners, wie im Rahmen der vorliegenden Erfindung vorgeschlagen, vorteilhaft erscheint.

In einer bevorzugten Ausgestaltung ist im Trocknerabluftkanal eine Abluftklappe angeordnet, die dazu ausgebildet und eingerichtet ist, bei Stillstand des Kältefluid-Verdichters den Trocknerabluftkanal zu verschließen. Hierdurch wird eine Rückströmung der Abluft zurück in einen Betriebsraum, in dem der Kältetrockner installiert ist, verhindert.

Dabei kann in einer bevorzugten Ausgestaltung die Abluftklappe als eine durch Schwerkraft betätigte Abluftklappe ausgebildet sein, die öffnet, sofern der Lüfter die Abluft durch den Trocknerabluftkanal fördert, und schließt, sofern der Lüfter stillsteht.

In einer alternativ möglichen Ausgestaltung kann die Abluftklappe mit einem Antriebsmotor zusammenwirken, wobei der Antriebsmotor von der Steuerung angesteuert wird, derart, dass abhängig vom Betriebszustand des Lüfters die Abluftklappe geöffnet oder geschlossen wird. Insbesondere wird bzw. ist die Abluftklappe im Betrieb des Lüfters geöffnet. Bei Stillstand des Lüfters wird bzw. ist die Abluftklappe insbesondere geschlossen.

Das bereits weiter oben angegebene erfindungsgemäße Verfahren zum Ansteuern des Lüfters zeichnet sich unter anderem dadurch aus, dass der Kältetrockner einen Lüfter mit einem drehzahlregelbaren Lüftermotor aufweist und der Lüfter zur Förderung des Kühlluftstroms auch gegen einen aktuellen Abluftkanal vorherrschenden Gegendruck aufgebildet ist, wobei der Kältetrockner eine Steuerung aufweist oder mit einer Steuerung zusammenwirkt, die den Lüftermotor des Lüfters so ansteuert, dass der Lüfter den Abluftkanal herrschenden Gegendruck ausgleicht.

In einer bevorzugten Weiterbildung des vorliegenden Verfahrens ist vorgesehen, dass der aktuelle Kondensationsdruck in eine aktuelle Kondensationstemperatur $T_{c, act}$ umgerechnet wird und der Lüfter derart angesteuert wird, dass die aktuelle Kondensationstemperatur $T_{c, act}$ einem Sollwert für die Kondensationstemperatur $T_{c, soll}$ folgt, wobei dieser Sollwert für die Kondensationstemperatur $T_{c, soll}$ in einer bestimmten Abhängigkeit der Zulufttemperatur $T_{amb}$ steht, also auch die tatsächlichen Gegebenheiten, was die Temperatur der zu Kühlzwecken über den Kältetrockner geführten Kühlluft anbelangt, Berücksichtigung finden.

In einer konkreten Weiterbildung des vorgeschlagenen Verfahrens wird für die Berechnung des Sollwerts für die Kondensationstemperatur $T_{c, soll}$ bei Temperaturen der Zuluft unterhalb einer Grenztemperatur $T_{0, amb}$ eine trocknerspezifische konstante Minimaltemperatur als Sollwert für die Kondensationstemperatur $T_{c, soll}$ festgelegt. Eine derartige konstante Minimaltemperatur $T_{fix}$ für die Kondensationstemperatur $T_{c, soll}$ kann beispielsweise bei 25 °C liegen. Das Festlegen einer derartigen Minimaltemperatur hat sich als sinnvoll erwiesen, um einen gewissen Mindestkondensationsdruck aufrechtzuerhalten, was wiederum für einen definierten Prozess im Kältefluidkreislauf, insbesondere hinsichtlich eines gewissen Mindestdruckgradienten am Expansionsventil sinnvoll erscheint.

In einer weiterhin vorteilhaften Ausgestaltung des vorliegenden Verfahrens ergibt sich der Sollwert für die Kondensationstemperatur $T_{c, soll}$ bei Temperaturen oberhalb einer Grenztemperatur $T_{0, amb}$ aus der Zulufttemperatur $T_{amb}$ mit einem trocknerspezifischen Aufschlag $\Delta T$. Ein derartiger trocknerspezifischer Aufschlag kann beispielsweise bei 10 °C liegen, je nach Bauform und Effizienz des Kondensators. Wird die Wärme der Zuluft besonders gut an den Kondensator übertragen, ist der trocknerspezifische Aufschlag $\Delta T$ geringer, ist die Effizienz der Wärmeübertragung hingegen weniger gut ausgebildet, wird ein höherer Aufschlag $\Delta T$ gewählt.

In einer besonders vorteilhaften Ausgestaltung wird der Sollwert für die Kondensationstemperatur $T_{c, soll}$ aus der nachstehenden Formel

$$T_{c, soll} = \max \left[ T_{amb} + \Delta T \text{ oder } T_{fix} \right]$$

generiert, wobei $T_{amb}$ die Zulufttemperatur, $\Delta T$ einen trocknerspezifischen Aufschlag und $T_{fix}$ eine trocknerspezifischer konstante Minimaltemperatur bezeichnen.

In einer möglichen Ausgestaltung des vorliegenden Verfahrens gelangt zur Ansteuerung des Antriebsmotors des Lüfters zur Annäherung von $T_{c, act}$ an $T_{c, soll}$ ein PID-Regler, ein P-I-Regler, eine Totbandregelung oder eine Dreipunktregelung zum Einsatz, wobei sich eine Regelabweichung e aus $T_{c, soll} - T_{c, act}$ ergibt und wobei $T_{c, soll}$ den Sollwert für die Kondensationstemperatur und $T_{c,\,act}$ die aktuelle Kondensationstemperatur bezeichnen.

Die Erfindung wird nachstehend auch hinsichtlich weiterer Merkmale und Vorteile anhand der Beschreibung von Ausführungsbeispielen und unter Bezugnahme auf die nachstehenden Zeichnungen näher erläutert. Hierbei zeigen:

Figur 1　ein Ausführungsbeispiel einer erfindungsgemäßen Druckluftstation in skizzenhafter Darstellung;

Figur 2　eine gegenüber der Ausführungsform nach Figur 1 modifizierte Ausführungsform einer Druckluftstation nach der Erfindung in skizzenhafter Darstellung;

Figur 3　eine gegenüber den Figuren 1 und 2 nochmals modifizierte Ausführungsform einer Druckluftstation in skizzenhafter Darstellung;

Figur 4　eine gegenüber den Figuren 1 bis 3 nochmals modifizierte Ausführungsform einer Druckluftstation in skizzenhafter Darstellung;

Figur 5　eine gegenüber den Figuren 1 bis 4 nochmals modifizierte Ausführungsform einer Druckluftstation in skizzenhafter Darstellung;

Figur 6　eine skizzenhafte Darstellung zur Erläuterung der Funktionsweise eines Kältetrockners nach der vorliegenden Erfindung; und

Figur 7　ein Ablaufdiagramm zur Erläuterung einer Ausführungsform des erfindungsgemäßen Verfahrens.

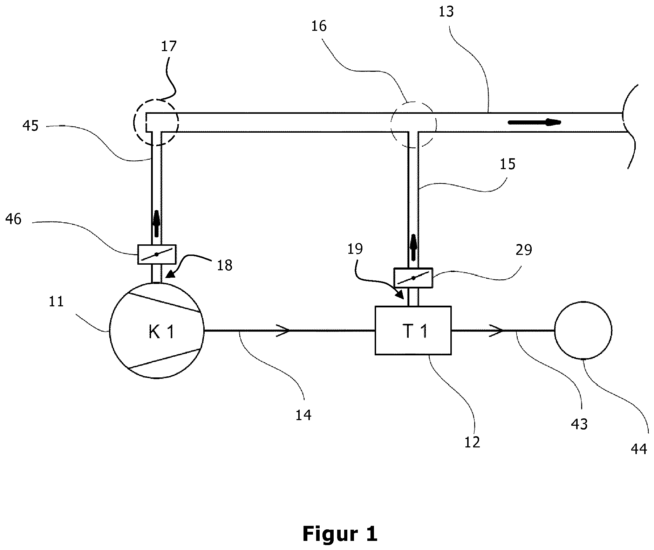

In Figur 1 ist ein Ausführungsbeispiel einer erfindungsgemäßen Druckluftstation dargestellt, bei der als Druckluftkomponenten ein Schraubenkompressor 11 und ein Kältetrockner 12 an einen gemeinsamen Abluftkanal 13 angeschlossen sind. Der Schraubenkompressor 11 liefert über eine Druckluftleitung 14 Druckluft an den Kältetrockner 12. Über eine weitere Druckluftleitung 43 wird die im Kältetrockner 12 getrocknete Druckluft einem Verbraucher 44 zugeführt. Anstelle eines Verbrauchers können auch eine Mehrzahl, insbesondere eine Vielzahl von Verbrauchern über ein Druckluftnetz durch die weitere Druckluftleitung 43 mit Druckluft versorgt werden.

Der Schraubenkompressor 11 und der Kältetrockner 12 produzieren Abwärme, die über entsprechende Kühlluftströme erfindungsgemäß über den gemeinsamen Abluftkanal 13 abgeführt wird. Ein Schraubenkompressor-Abluftkanal 45 bildet das erste Teilstück eines gemeinsamen Abluftkanals 13, an den auch weiter stromabwärts der Kältetrockner 12 über einen Trocknerabluftkanal 15 angeschlossen ist. Konkret weist der Schraubenkompressor 11 einen Kühlluftauslass 18 auf, an den unmittelbar der Schraubenkompressorabluftkanal 45 angeschlossen ist. Der Kältetrockner 12 weist ebenfalls einen Kühlluftauslass 19 auf, an den der Trocknerabluftkanal 15 unmittelbar angeschlossen ist, und zwar vorzugsweise derart, dass ausschließlich die Kühlluft bzw. die Abwärme des Kältetrockners 12 abgeführt wird und keine Vermischung mit nicht über den Kältetrockner 12 geführter Umgebungsluft erfolgt.

Am bereits erwähnten Kältetrockner-Anschluss 16 ist der Trocknerabluftkanal 15 an den gemeinsamen Abluftkanal 13 angeschlossen. Zwischen Kältetrockner 12 und dem Kältetrockner-Anschluss 16 am Abluftkanal 13, insbesondere innerhalb des Trocknerabluftkanals 15 ist noch eine Abluftklappe 29 angeordnet, mittels derer der Trocknerabluftkanal 15 verschlossen werden kann.

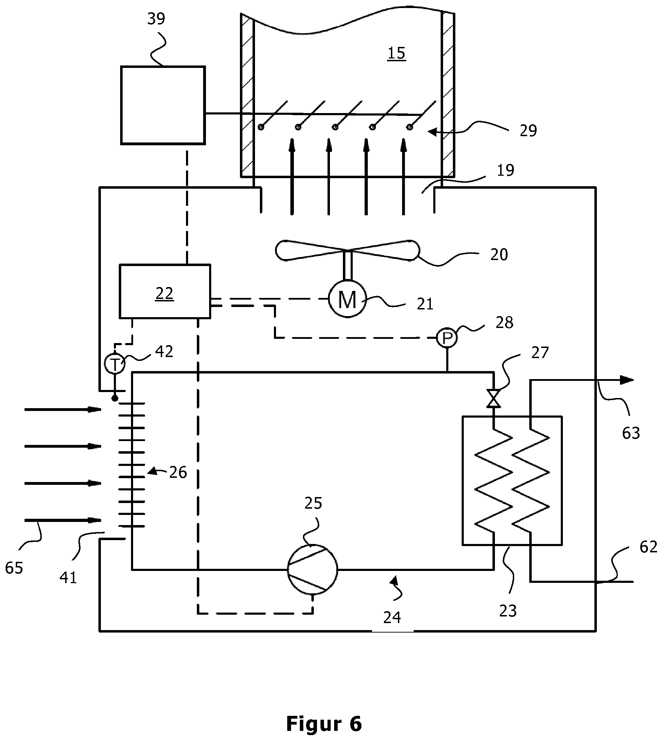

Auch zwischen Schraubenkompressor 11, also zwischen dem Kühlluftauslass 18 des Schraubenkompressors 11 und dem Kältetrockneranschluss 16, insbesondere innerhalb des Schraubenkompressor-Abluftkanals 45 kann noch eine weitere Abluftklappe 46 angeordnet sein. Die Abluftklappe 29 des Kältetrockners und/oder die Abluftklappe 46 des Schraubenkompressors können entweder als passive Rückstromklappen unter Ausnützung einer ausreichenden Strömung in Förderrichtung geöffnet bzw. schwerkraftbedingt geschlossen werden. Es ist aber auch möglich (vgl. Darstellung in Figur 6) die Abluftklappe 29 mit Hilfe eines Antriebsmotors 39 zu öffnen bzw. zu schließen. Natürlich kann auch die Abluftklappe 46 des Schraubenkompressors mit Hilfe eines Antriebsmotors (nicht gezeigt) geöffnet bzw. geschlossen werden.

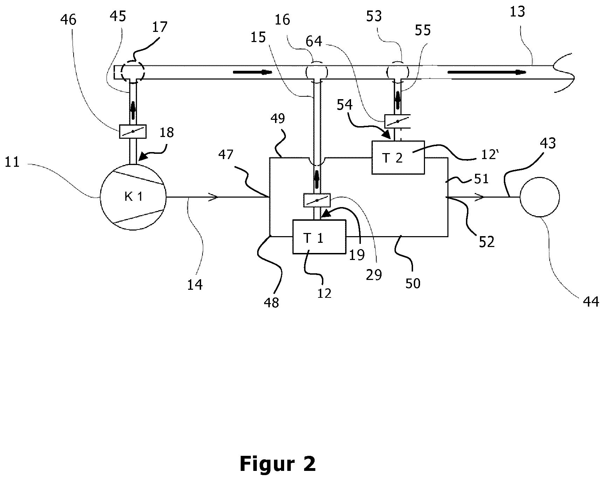

In Figur 2 ist eine gegenüber der Ausführungsform nach Figur 1 abgewandelte Ausführungsform einer Druckluftstation nach der Erfindung dargestellt, bei der als Druckluftkomponenten ein Schraubenkompressor 11 und ein erster Kältetrockner 12 sowie ein weiterer Kältetrockner 12' an einen gemeinsamen Abluftkanal 13 angeschlossen sind. Dort wird die vom Schraubenkompressor an die Druckluftleitung 14 übergebene Druckluft in einem Verzweigungspunkt 47 in eine erste Teilleitung 48 sowie eine zweite Teilleitung 49 aufgeteilt.

In der ersten Teilleitung 48 ist der erste Kältetrockner 12 und in der zweiten Teilleitung 49 der zweite Kältetrockner 12' angeordnet. Die getrocknete Druckluft verlässt den ersten Kältetrockner 12 über eine dritte Teilleitung 50. Die getrocknete Druckluft, die über die zweite Teilleitung 49 in den zweiten Kältetrockner 12' einströmt und dort getrocknet wird, verlässt den Kältetrockner 12' über eine vierte Teilleitung 51. An einem Vereinigungspunkt 52 werden dritte Teilleitung 50 und vierte Teilleitung 51 zusammengeführt und gehen in die Druckluftleitung 43 über, welche die Druckluft an mindestens einen Verbraucher 44 führt.

Der Schraubenkompresser 11, der Kältetrockner 12 sowie der Kältetrockner 12' leiten ihre Kühlluftströme jeweils in einen gemeinsamen Abluftkanal 13. Hierzu ist der Schraubenkompressor 11 in der an sich schon anhand der Ausführungsform nach Figur 1 beschriebenen Weise an den Abluftkanal 13 angeschlossen. Auch der erste Kältetrockner 12 ist wie bereits anhand der Ausführungsform nach Figur 1 beschrieben an den gemeinsamen Abluftkanal 13 zur Übergabe der aus dem Kühlluftauslass 19 abgegebenen Kühlluft bzw. Abwärme angeschlossen. Stromab des Kältetrockneranschlusses 16, der dem ersten Kältetrockner 12 zugeordnet ist, ist am Abluftkanal 13 ein zweiter Kältetrockneranschluss 53 vorgesehen, an dem stromabwärts im Abluftkanal 13 auch die Kühlluft des zweiten Kältetrockners 12' eingebracht wird. Hierzu ist ein Kühlluftauslass 54 des zweiten Kältetrockners an einen Trockner-Abluftkanal 55 angeschlossen, der den Kühlluftauslass 54 des zweiten Kältetrockners 12' mit dem Kältetrockner-Anschluss 53 am Abluftkanal 13 verbindet, so dass die Kühlluft auch des zweiten Kältetrockners ohne nicht über den zweiten Kältetrockner 12' geführte Umgebungsluft abgeführt wird. Auch in diesem, dem zweiten Kältetrockner 12' zugeordneten Trockner-Abluftkanal ist eine Abluftklappe 64 vorgesehen, um den Abluftkanal 55 insbesondere bei Stillstand des zweiten Kältetrockners 12' verschließen zu können.

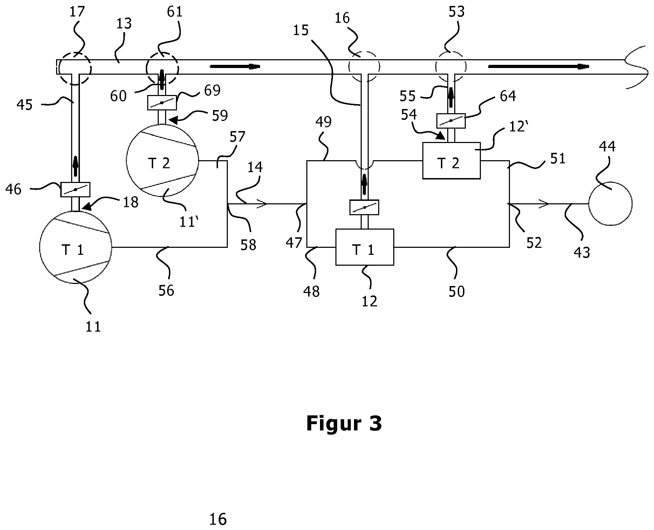

In Figur 3 ist eine gegenüber den Ausführungsformen nach Figur 1 bzw. Figur 2 nochmals modifizierte Ausführungsform einer Druckluftstation dargestellt, bei der als Druckluftkomponenten ein erster Schraubenkompressor 11, ein zweiter Schraubenkompressor 11', ein erster Kältetrockner 12 sowie ein zweiter Kältetrockner 12' an einen gemeinsamen Abluftkanal 13 angeschlossen sind. Bei der in Figur 3 veranschaulichten Ausführungsform einer Druckluftstation sind zwei Schraubenkompressoren, nämlich der erste Schraubenkompressor 11 sowie der zweite Schraubenkompressor 11' vorgesehen, die hinsichtlich der Drucklufterzeugung parallel zueinander arbeiten, also der Schraubenkompressor 11 Druckluft an einer ersten Ausgangsleitung 56 und der Schraubenkompressor 11' Druckluft an eine zweite Ausgangsleitung 57 ausgibt. In einem Vereinigungspunkt 58 vereinigen sich erste Ausgangsleitung 56 und zweite Ausgangsleitung 57 zu einer gemeinsamen Druckluftleitung 14. Von der Druckluftleitung 14 ausgehend wird die Druckluft in einem Verzweigungspunkt 47 an eine erste Teilleitung 48 und an eine zweite Teilleitung 49 geführt, in der jeweils ein Kältetrockner 12 bzw. 12' angeschlossen ist. Die Druckluft wird insofern von den zwei Kältetrocknern 12, 12' parallel getrocknet, so dass die Anordnung der beiden Kältetrockner exakt der Anordnung der beiden Kältetrockner gemäß der Ausführungsform nach Figur 2 entspricht. Auch die Abfuhr der Kühlluft bzw. Abwärme über Trocknerabluftkanal 15 bzw. Trocknerabluftkanal 55 ist exakt wie bei der Anordnung gemäß Figur 2 gelöst.

Abweichend von der Anordnung nach Figur 2 sind aber bei der Ausführungsform nach Figur 3 nicht nur zwei Kältetrockner 12, 12' an den gemeinsamen Abluftkanal 13 angeschlossen, sondern auch die bereits erwähnten beiden Schraubenkompressoren 11, 11'. Der erste Schraubenkompressor 11 ist wie bereits anhand der Figuren 1 bzw. 2 beschrieben, an den gemeinsamen Abluftkanal 13 angeschlossen und stellt bezogen auf die Strömungsrichtung des Abluftkanals 13 die am meisten stromaufwärts angeordnete, Abwärme liefernde Komponente dar. Der Schraubenkompressor 11 ist also der stromaufwärtigst platzierte Abwärmelieferant innerhalb des gemeinsamen Abluftkanals 13.

Der bereits erwähnte zweite Schraubenkompressor 11' weist einen Kühlluftauslass 59 auf, mit dem er an einen Schraubenkompressorabluftkanal 60 angeschlossen ist. Innerhalb des Schraubenkompressorabluftkanals 60 ist eine Abluftklappe 69 angeordnet, mit der der Schraubenkompressorabluftkanal 60 verschlossen werden kann. Der Schraubenkompressorabluftkanal 60 verbindet den Kühlluftauslass 59 des zweiten Schraubenkompressors 11' mit einem Kompressoranschluss 61, an dem der Trocknerabluftkanal 60 an den gemeinsamen Abluftkanal 13 angeschlossen ist, und zwar an einem Abschnitt zwischen dem Kompressor-Anschluss 17 des ersten Schraubenkompressors 11 und dem Kältetrockner-Anschluss 16 des ersten Kältetrockners 12 bzw. dem zweiten Kältetrockner-Anschluss 53 des Kältetrockners 12'.

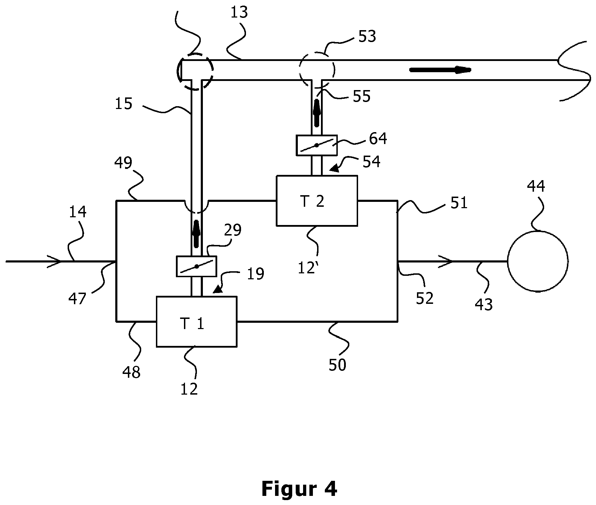

In Figur 4 ist eine nochmals abgewandelte Ausführungsform veranschaulicht, bei der als Druckluftkomponenten ein erster Kältertrockner 12 sowie ein zweiter Kältetrockner 12' an einen gemeinsamen Abluftkanal 13 angeschlossen sind. Hier wird also ein gemeinsamer Abluftkanal 13 nicht von einem Kältetrockner 12 und einem Schraubenkompressor 11, sondern von zwei Kältetrocknern 12, 12' beschickt. Der Anschluss der Kältetrockner 12, 12' entspricht dem Anschluss der Kältetrockner 12, 12' in der Anordnung der Ausführungsform nach Figur 3 mit der einzigen Ausnahme, dass stromaufwärts der Anschlussstellen der Kältetrockner 12, 12' am gemeinsamen Abluftkanal 13 keine Kühlluft bzw. Abwärme eines Schraubenkompressors 11, 11' eingeleitet wird.

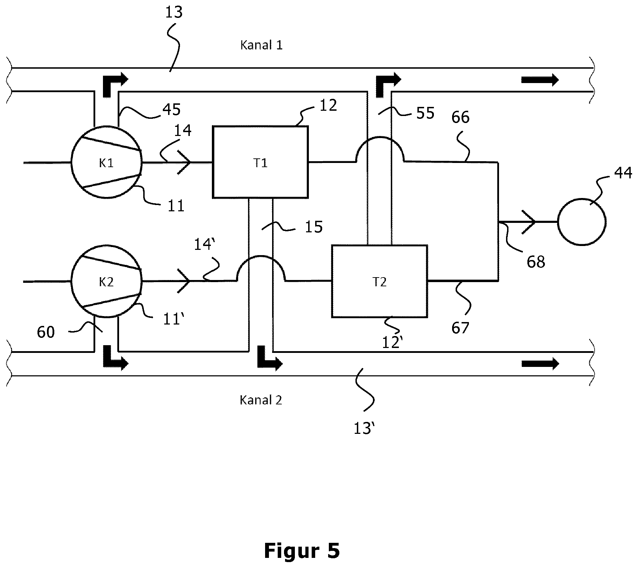

In Figur 5 ist eine nochmals abgewandelte Ausführungsform veranschaulicht, bei der als Druckluftkomponenten ein erster Schraubenkompressor 11 Abwärme in einen ersten Abluftkanal 13 über einen Schraubenkompressorabluftkanal 45 abführt. Der Schraubenkompressor 11 liefert über eine Druckluftleitung 14 Druckluft an einen ersten Kältetrockner 12. Die im Kältetrockner 12 getrocknete Druckluft wird über eine erste Ausgangsleitung 66 an einen Vereinigungspunkt 68 geführt, an dem auch in einem zweiten Kältetrockner 12' getrocknete Druckluft über eine zweite Ausgangsleitung 67 geführt wird. Vom Vereinigungspunkt 68 ausgehend wird die zusammengeführte getrocknete Druckluft einen Verbraucher 44 zugeführt.

Ein zweiter Schraubenkompressor 11' erzeugt Druckluft und übergibt diese Druckluft über die Druckluftleitung 14' an den bereits erwähnten zweiten Kältetrockner 12'. Abwärme des zweiten Kältetrockners 11' wird über einen Schraubenkompressorabluftkanal 60 einem vom Abluftkanal 13 getrennten zweiten Abluftkanal 13' zugeführt. In diesen zweiten Abluftkanal 13' wird auch Abwärme des ersten Kältetrockners 12 über einen Trocknerabluftkanal 15 abgeführt. Der drucklufttechnisch mit dem zweiten Schraubenkompressor 11' verbundene zweite Kältetrockner 12' fördert hingegen seine Abluft über einen Trocknerabluftkanal 55 an den Abluftkanal 13, der auch vom ersten Schraubenkompressor 11 beschickt wird. Insofern sind hier die jeweils hintereinander geschalteten Paare von Schraubenkompressoren und Kältetrocknern verschränkt an zwei unterschiedliche Abluftkanäle 13, 13' angeschlossen. Auch bei der Ausführungsform nach Figur 5 können der Schraubenkompressorabluftkanal 45, der Schraubenkompressorabluftkanal 60, der Trocknerabluftkanal 15 und/oder der Trocknerabluftkanal 55 jeweils Abluftklappen 46, 69, 29, 64 aufweisen, die aber in Figur 5 nicht dargestellt sind.

Nachstehend werden unter Bezugnahme auf Figur 6 der prinzipielle Aufbau sowie die grundlegende Funktionsweise eines Kältetrockners 12, 12' nach der vorliegenden Erfindung näher erläutert. Der Kältetrockner weist zunächst einen Drucklufteinlass 62 sowie einen Druckluftauslass 63 auf. Die über den Drucklufteinlass 62 in den Kältetrockner 12, 12' einströmende Druckluft wird an einem Druckluft-Kältemittel-Wärmetauscher 23 durch ein Kältefluid gekühlt und verlässt den Kältetrockner durch den Druckluftauslass 63. Meist wird die Druckluft, wie es dem Fachmann hinlänglich bekannt ist, vor Einströmen in den Druckluft-Kältemittel-Wärmetauscher 23 in einem Vorwärmetauscher vorgekühlt, und zwar durch die bereits durch den Druckluft-Kältemittel-Wärmetauscher 23 geströmte Druckluft, die dadurch vor dem Ausströmen aus dem Druckluftauslass 63 wieder erwärmt wird. Der vorstehend beschriebene Vorwärmetauscher ist vorliegend jedoch nicht dargestellt.

Zur Bereitstellung der am Druckluft-Kältemittel-Wärmetauscher 23 benötigten Kälteleistung ist dieser Bestandteil eines Kältefluidkreislaufs 24, der eine an sich bekannte Kompressionskältemaschine ausbildet und insofern in Strömungsrichtung des Kältefluids betrachtet ausgehend vom Druckluft-Kältemittel-Wärmetauscher 23 an den Kältefluidverdichter 25, einen daran angeschlossenen Kondensator 26 sowie stromabwärts davon ein Expansionsventil 27 umfasst. Das nach Durchströmen des Expansionsventils 27 expandierte Gas ist durch den Expansionsvorgang abgekühlt und nimmt im Druckluft-Kältemittel-Wärmetauscher 23 Wärme aus der Druckluft auf. Der Kältefluidverdichter 25 komprimiert das Kältefluid. Die dabei entstehende Wärme wird im Kondensator 26 an die Zuluft abgegeben. Zu diesem Zwecke wird ein Kühlluftstrom 65 durch den Kältetrockner 12, 12' geführt, wobei die Zuluft im Regelfall Umgebungsluft darstellt und in einem Zulufteinlass 41 in den Kältetrockner 12, 12' eingesaugt wird, und zwar unter Wirkung eines über einen Lüftermotor 21 angetriebenen Lüfters 20.

Der Kühlluftstrom 65 nimmt im Kondensator 26 Wärme auf, so dass das Kältefluid im Kondensator 26 gekühlt wird. Die so entstehende Abwärme soll erfindungsgemäß über einen Trocknerabluftkanal 15 an einen Abluftkanal 13, in dem auch Abwärme anderer Druckluft erzeugender oder Druckluft aufbereitender Komponenten geführt ist, eingebracht werden. Zu diesem Zweck ist der Trocknerabluftkanal 15 unmittelbar am Kühlluftauslass 19 des Kältetrockners 12, 12' angeschlossen. Eine Abluftklappe 29, die über einen Antriebsmotor 39 verstellt werden kann, insbesondere von einer Offen- in eine Schließposition bzw. vice versa, wirkt mit einer Steuerung 22 zusammen, die die Abluftklappe 29 ansteuert und im Bedarfsfall schließt bzw. öffnet.

Die Steuerung 22 steuert aber auch den Lüftermotor 21 des Lüfters 20 an. Der Lüftermotor 21 ist dabei drehzahlregelbar, so dass die Steuerung 22 die jeweils erforderliche Leistung des Lüfters exakt vorgeben kann. Konkret wird die Drehzahl des Lüftermotors 21 des Lüfters 20 so verändert, dass die Abluftmenge des Kältetrockners 12, 12' unabhängig vom aktuellen Gegendruck im Abluftkanal 13 unverändert bleibt. Hierdurch kann der Kondensationsdruck des Kältefluids im Kondensator 26 unabhängig vom aktuellen Gegendruck im Abluftkanal 13 auf gleichem Niveau gehalten werden. Insofern wird die Kälteleistung entsprechend dem konstant gehaltenen Drucktaupunkt ebenfalls konstant gehalten. Eine Veränderung des Kondensationsdrucks bzw. der Kälteleistung nach anderen Kriterien bleibt natürlich dennoch möglich. Entscheidend ist, dass der aktuell gegebene Gegendruck im Abluftkanal 13 ohne Einfluss auf den Kondensationsdrucks bzw. die Kälteleistung im Kondensator 26 des Kältefluids im Kältefluidkreislauf 24 ist. Dadurch, dass der Kondensationsdruck bzw. die Kälteleistung des Kältetrockners konstant gehalten werden, wird auch der Drucktaupunkt für die Druckluft auf einem konstanten Wert gehalten.

Um den aktuellen Kondensationsdruck $p_{c, act}$ zu erfassen, wird der Druck des Kältefluids im Kondensator 26 bzw. in der Leitung zwischen Kondensator 26 und dem Expansionsventil 27, in der im Wesentlichen gleiche Druckverhältnisse herrschen, über einen Drucksensor 28 erfasst. Die Werte des Drucksensors 28 werden an die Steuerung 22 übergeben, die die Antriebsleistung des Lüftermotors 21 in geeigneter Weise regelt. In einer bevorzugten Ausgestaltung kann der Kältetrockner 12, 12' weiterhin noch einen Temperatursensor 42, vorzugsweise im Bereich des Zulufteinlasses aufweisen, um eine Temperatur der Umgebungsluft bzw. eine Temperatur der Zuluft zu erfassen.

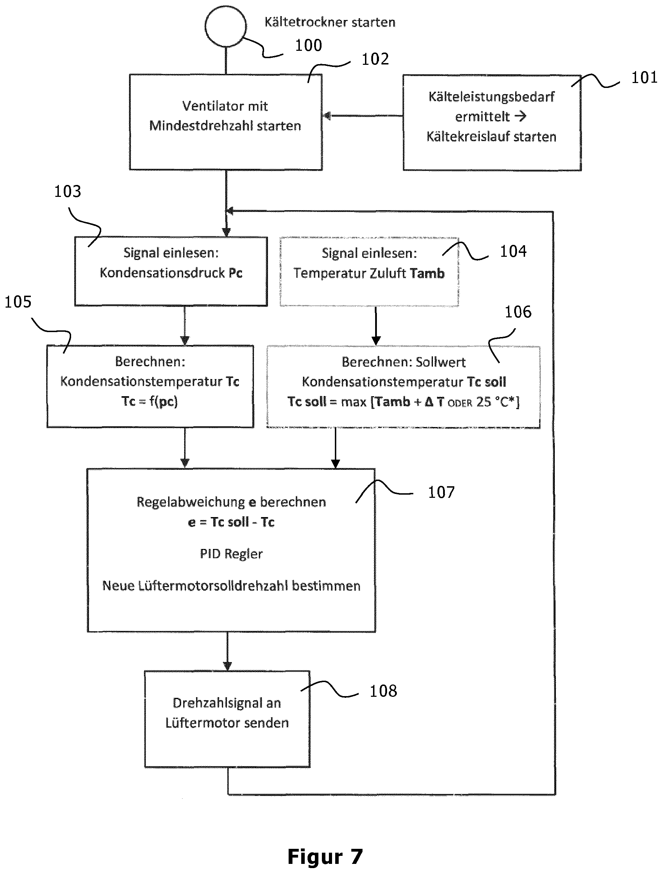

Eine bevorzugte Regelung unter Berücksichtigung des aktuellen Kondensationsdrucks bzw. vorzugsweis auch unter Berücksichtigung der Zulufttemperatur $T_{amb}$ wird nachstehend unter Bezugnahme auf das Ablaufdiagramm nach Figur 7 näher erläutert: In einem Schritt 100 wird zunächst der Kältetrockner 12, 12' gestartet.

In einem Schritt 101 wird der Kälteleistungsbedarf ermittelt und der Kältefluidkreislauf 24 durch Inbetriebsetzen des Kältefluid-Verdichters 25 gestartet. Der Lüfter 20 wird im Schritt 102 mit einer festgelegten Mindestdrehzahl gestartet. Anschließend wird im Schritt 103 der aktuelle Kondensationsdruck $p_{c,\,act}$ im Kondensator 26 oder in der sich daran anschließenden Leitung zwischen Kondensator 26 und Expansionsventil 27 ermittelt und der so ermittelte Wert in die Steuerung 22 eingelesen. Weiterhin wird in einem Schritt 104 die Zulufttemperatur $T_{amb}$ erfasst und der Wert in die Steuerung 22 eingelesen. In einem Schritt 105 wird aus dem aktuellen Kondensationsdruck $p_{c,\,act}$ eine aktuelle Kondensationstemperatur $T_{c,\,act}$ errechnet. In einem Schritt 106 wird ein Sollwert für die Kondensationstemperatur nach folgender Formel errechnet:

$$T_{c,\,soll} = max\ [T_{amb} + \Delta T\ oder\ 25\ °C],$$

wobei $T_{amb}$ die Zulufttemperatur und $\Delta T$ einen trocknerspezifischen Aufschlag darstellen. Der Wert von 25 °C ist beim vorliegenden Ausführungsbeispiel als trocknerspezifische, konstante Minimaltemperatur vorgegeben.

Im Schritt 107 wird eine Regelabweichung e aus der Differenz von $T_{c,\,soll}$ und $T_{c,\,act}$ berechnet und über einen geeigneten Regler, beispielsweise einen PID-Regler, die Drehzahl des Lüftermotors 21 dadurch nachjustiert, dass zunächst eine neue Lüftermotorsolldrehzahl bestimmt wird. Basierend auf dieser neuen Lüftermotorsolldrehzahl wird im Schritt 108 von der Steuerung 22 ein Drehzahlsignal an den Lüftermotor 21 des Lüfters 20 gesandt. Beispielsweise in einer vordefinierten Abtastfrequenz von z.B. 100 ms beginnt das Verfahren dann mit Schritt 102 bzw. Schritt 103 von neuem.

Bezugszeichen

| | |
|---|---|
| 11, 11' | Schraubenkompressor |
| 12, 12' | Kältetrockner |
| 13, 13' | Abluftkanal |
| 14, 14' | Druckluftleitung |
| 15 | Trockner-Abluftkanal |
| 16 | Kältetrockner-Anschluss |
| 17 | Kompressor-Anschluss |
| 18 | Kühlluftauslass (Schraubenkompressor) |
| 19 | Kühlluftauslass (Kältetrockner) |
| 20 | Lüfter |
| 21 | Lüftermotor |
| 22 | Steuerung |
| 23 | Druckluft-Kältemittel-Wärmetauscher |
| 24 | Kältefluidkreislauf |
| 25 | Kältefluid-Verdichter |
| 26 | Kondensator |
| 27 | Expansionsventil |
| 28 | Drucksensor |
| 29 | Abluftklappe |
| 39 | Antriebsmotor |
| 40 | Drucksensor |
| 41 | Zulufteinlass |
| 42 | Umgebungsluftsensor/Temperatursensor |
| 43 | weitere Druckluftleitung |
| 44 | Verbraucher |
| 45 | Schraubenkompressorabluftkanal |
| 46 | Abluftklappe (Schraubenkompressor) |
| 47 | Verzweigungspunkt |
| 48 | erste Teilleitung |
| 49 | zweite Teilleitung |
| 50 | dritte Teilleitung |
| 51 | vierte Teilleitung |
| 52 | Vereinigungspunkt |
| 53 | weiterer Kältetrockneranschluss |
| 54 | Kühlluftauslass |
| 55 | Trockner-Abluftkanal |
| 56 | erste Ausgangsleitung |
| 57 | zweite Ausgangsleitung |
| 58 | Vereinigungspunkt |
| 59 | Kühlluftauslass |
| 60 | Schraubenkompressorabluftkanal |
| 61 | Kompressor-Anschluss |
| 62 | Drucklufteinlass |
| 63 | Druckluftauslass |
| 64 | Abluftklappe |
| 65 | Kühlluftstrom |
| 66 | erste Ausgangsleitung |
| 67 | zweite Ausgangsleitung |
| 68 | Vereinigungspunkt |
| 69 | Abluftklappe |
| $p_{c,\,act}$ | aktueller Kondensationsdruck |
| $T_{c,\,act}$ | aktuelle Kondensationstemperatur |
| $T_{amb}$ | Zulufttemperatur |
| $T_{c,\,soll}$ | Sollwert für die Kondensationstemperatur |
| $T_{fix}$ | trocknerspezifische, konstante Minimaltemperatur |
| $T_{0,\,amb}$ | Grenztemperatur (Zuluft) |
| $\Delta T$ | trocknerspezifischer Aufschlag |

**Patentansprüche**

1. Druckluftstation umfassend mindestens zwei Abwärme liefernde Druckluftkomponenten, wobei die jeweilige Druckluftkomponente entweder als Verdichter, insbesondere als Schraubenkompressor, oder als Kältetrockner ausgebildet ist, sowie mindestens einen Abluftkanal (13) zur Ableitung von Abwärme aus einem Raum,

   wobei an den Abluftkanal (13) mindestens eine der Druckluftkomponenten, nämlich ein Kältetrockner (12) angeschlossen ist, und
   wobei an denselben Abluftkanal (13) eine weitere Druckluftkomponente (11) angeschlossen ist,
   wobei innerhalb des Kältetrockners (12) ein Druckluft-Kältemittel-Wärmetauscher (23) vorgesehen ist, in dem die Druckluft über ein in einem Kältefluidkreislauf (24) geführtes Kältefluid gekühlt wird, wobei der Kältefluidkreislauf (24) einen Kältefluid-Verdichter (25), einen Kondensator (26), ein Expansionsventil (27) und den Druckluft-Kältemittel-Wärmetauscher (23) umfasst,

wobei die Druckluftstation weiterhin einen Trockner-Abluftkanal (15) umfasst, der zur Ableitung eines durch den Kältetrockner (12) geführten Kühlluftstroms vom Kältetrockner (12) vorgesehen ist und einen Kühlluftauslass (19) des Kältetrockners (12) mit einem Kältetrockner-Anschluss (16) am Abluftkanal (13) verbindet,

wobei der Kältetrockner (12) einen Lüfter (20) mit einem drehzahlregelbaren Lüftermotor (21) aufweist und der Lüfter (20) zur Förderung des Kühlluftstroms auch gegen einen aktuell im Abluftkanal (13) vorherrschenden Gegendruck ausgebildet ist,

und wobei der Kältetrockner (12) eine Steuerung aufweist oder mit einer Steuerung zusammenwirkt, die dazu eingerichtet und ausgebildet ist, den drehzahlregelbaren Lüftermotor (21) des Lüfters derart anzusteuern, dass der Lüfter (20) den im Abluftkanal (13) herrschenden Gegendruck ausgleicht, so dass ein vom Kühlluftstrom transportiertes Volumen pro Zeiteinheit unverändert bleibt.

2. Druckluftstation nach Anspruch 1,
**dadurch gekennzeichnet, dass**
der Kältetrockner (12) einen Drucksensor (28) zur Erfassung eines für den aktuellen Kondensationsdruck $p_{c,act}$ innerhalb des Kondensators (26) repräsentativen Werts aufweist und dass die Steuerung (22) dazu eingerichtet und ausgebildet ist, die Daten des Drucksensors (28) zu erfassen und zu verarbeiten und über eine Regelung des Kondensationsdrucks $p_c$ oder der Kondensationstemperatur $T_c$ auf einen Solldruck für den Kondensationsdruck $p_{c,soll}$ oder eine Solltemperatur für die Kondensationstemperatur $T_{c,soll}$ den drehzahlregelbaren Lüftermotor (21) des Lüfters (20) entsprechend anzusteuern, so dass unabhängig vom aktuellen Gegendruck im Abluftkanal (13) ein vom Kühlluftstrom transportiertes Volumen pro Zeiteinheit unverändert bleibt.

3. Druckluftstation nach Anspruch 1 oder 2,
**dadurch gekennzeichnet, dass**
ein Schraubenkompressor (11) und der Kältetrockner (12) über eine Druckluftleitung (14) miteinander verbunden sind und die Druckluftleitung (14) dazu ausgebildet ist, die vom Schraubenkompressor (11) ausgegebene Druckluft zu Trocknungszwecken an den Kältetrockner (12) zu überführen, wobei ein Kühlluftauslass (18) des Schraubenkompressors (11) über einen Kompressor-Anschluss (17) an den Abluftkanal (13) angeschlossen ist, an den auch der Kältetrockner (12) angeschlossen ist.

4. Druckluftstation nach Anspruch 1 bis 3,
**dadurch gekennzeichnet, dass**
der Lüfter (20) des Kältetrockners (12) als Radiallüfter ausgebildet ist.

5. Druckluftstation nach einem der Ansprüche 1 bis 3,
**dadurch gekennzeichnet, dass**
die Steuerung (22) mit einem Umgebungsluftsensor, vorzugsweise einem Temperatursensor (42) zusammenwirkt, um einen für den Zustand der Zuluft, insbesondere einen für die Zulufttemperatur repräsentativen Wert zu erfassen und an die Steuerung zu übermitteln.

6. Druckluftstation nach einem der Ansprüche 1-5,
**dadurch gekennzeichnet, dass**
im Trocknerabluftkanal (15) eine Abluftklappe (29) angeordnet ist, die dazu ausgebildet und eingerichtet ist, bei Stillstand des Kältefluid-Verdichters (25) den Trockner-Abluftkanal (15) zu verschließen.

7. Druckluftstation nach Anspruch 6,
**dadurch gekennzeichnet, dass**
die Abluftklappe (29) als schwerkraftbetätigte Abluftklappe ausgebildet ist, die öffnet, sofern der Lüfter (20) den Kühlluftstrom durch den Trockner-Abluftkanal (15) fördert und schließt, sofern der Lüfter (20) stillsteht.

8. Druckluftstation nach Anspruch 6,
**dadurch gekennzeichnet, dass**
die Abluftklappe (29) mit einem Antriebsmotor (39) zusammenwirkt, wobei der Antriebsmotor (39) von der Steuerung (22) angesteuert wird derart, dass abhängig vom Betriebszustand des Lüfters (20) die Abluftklappe (29) geöffnet oder geschlossen wird.

9. Verfahren zum Ansteuern eines drehzahlregelbaren Lüftermotors (21) eines Lüfters (20) eines Kältetrockners (12) innerhalb einer Druckluftstation, wobei die Druckluftstation mindestens zwei Abwärme liefernde Druckluftkomponenten, wobei die jeweilige Druckluftkomponente entweder als Verdichter, insbesondere als Schraubenkompressor, oder als Kältetrockner ausgebildet ist, sowie mindestens einen Abluftkanal (13) zur Ableitung von Abwärme aus einem Raum umfasst, wobei an den Abluftkanal (13) mindestens eine der Druckluftkomponenten, nämlich ein Kältetrockner (12) angeschlossen ist, und wobei an denselben Abluftkanal (13) eine weitere Druckluftkomponente angeschlossen ist,

wobei innerhalb des Kältetrockners (12) ein Druckluft-Kältemittel-Wärmetauscher (23) vorgesehen ist, in dem die Druckluft über ein in einem Kältefluidkreislauf (24) geführtes Kältefluid gekühlt wird, wobei der Kältefluidkreislauf (24) einen Kältefluid-Verdichter (25), einen Kondensator (26), ein Expansionsventil (27) und den Druckluft-Kältemittel-Wärmetauscher (23) umfasst,

wobei die Druckluftstation weiterhin einen Trockner-Abluftkanal (15) umfasst, der zur Ableitung eines durch den Kältetrockner (12) geführten Kühlluftstroms vorgesehen ist und einen Kühlluftauslass (19) des Kältetrockners (12) mit einem Kältetrockner-Anschluss (16) am Abluftkanal (13) verbindet,

wobei der Kältetrockner (12) einen Lüfter (20) mit einem drehzahlregelbaren Lüftermotor (21) aufweist und der Lüfter (20) zur Förderung des Kühlluftstroms auch gegen einen aktuell im Abluftkanal (13) vorherrschenden Gegendruck ausgebildet ist, und wobei die Druckluftstation, insbesondere der Kältetrockner eine Steuerung (22) aufweist oder mit einer Steuerung zusammenwirkt, die dazu eingerichtet und ausgebildet ist, den drehzahlregelbaren Lüftermotor (21) des Lüfters (20) derart anzusteuern, dass der Lüfter den im Abluftkanal herrschenden Gegendruck ausgleicht, so dass ein vom Kühlluftstrom transportiertes Volumen pro Zeiteinheit unverändert bleibt.

10. Verfahren nach Anspruch 9,
**dadurch gekennzeichnet, dass**
das Verfahren weiterhin die folgenden Schritte umfasst:

- Einlesen eines für den aktuellen Kondensationsdruck $p_{c, act}$ repräsentativen Wertes, der aktuell innerhalb des Kondensators (26) vorherrscht,
- Berechnen einer aktuellen Kondensationstemperatur $T_{c, act}$ aus dem Wert des aktuellen Kondensationsdrucks $p_{c, act}$,
- Einlesen eines für die Temperatur der Zuluft repräsentativen Werts, der eine Zulufttemperatur $T_{amb}$ definiert,
- Berechnen eines Sollwerts für die Kondensationstemperatur $T_{c, soll}$ in definierter Abhängigkeit der Zulufttemperatur $T_{amb}$ und
- Ansteuern des Lüftermotors (21) des Lüfters (20) derart, dass die aktuelle Kondensationstemperatur $T_{c, act}$ dem Sollwert für die Kondensationstemperatur $T_{c, soll}$ folgt.

11. Verfahren nach Anspruch 9 oder 10,
**dadurch gekennzeichnet, dass**
für die Berechnung des Sollwerts für die Kondensationstemperatur $T_{c, soll}$ bei Temperaturen der Zuluft unterhalb einer Grenztemperatur $T_{0, amb}$ eine trocknerspezifische, konstante Minimaltemperatur $T_{fix}$ als Sollwert für die Kondensationstemperatur $T_{c, soll}$

festgelegt wird.

12. Verfahren nach einem der Ansprüche 9 bis 11,
**dadurch gekennzeichnet, dass**
bei Temperaturen der Zuluft oberhalb einer Grenztemperatur $T_{0, amb}$ sich der Sollwert für die Kondensationstemperatur $T_{c, soll}$ aus der Zulufttemperatur $T_{amb}$ mit einem trocknerspezifischen Aufschlag $\Delta T$ ergibt.

13. Verfahren nach einem der Ansprüche 9 bis 12,
**dadurch gekennzeichnet, dass**
sich der Sollwert für die Kondensationstemperatur $T_{c, soll}$ aus der nachfolgenden Formel

$$T_{c, soll} = max [T_{amb} + \Delta T \text{ oder } T_{fix}]$$

ergibt, wobei $T_{amb}$ die Zulufttemperatur, $\Delta T$ einen trocknerspezifischen Aufschlag und $T_{fix}$ eine trocknerspezifische konstante Minimaltemperatur bezeichnen.

14. Verfahren nach einem der Ansprüche 9 bis 13,
**dadurch gekennzeichnet, dass**
zur Ansteuerung des Lüftermotors (21) des Lüfters (20) zur Annäherung von $T_{c, act}$ an $T_{c, soll}$ ein PID-Regler, ein PI-Regler, eine Totbandregelung oder eine Dreipunktregelung zum Einsatz gelangt, wobei sich eine Regelabweichung e aus $T_{c, soll}$ - $T_{c, act}$ ergibt und wobei $T_{c, soll}$ den Sollwert für die Kondensationstemperatur und $T_{c, act}$ die aktuelle Kondensationstemperatur bezeichnen.

**Claims**

1. Compressed air station comprising at least two compressed air components that yield waste heat, wherein each compressed air component is designed either as a compressor, in particular as a screw compressor, or as a refrigeration dryer (12), and at least one exhaust air duct (13) for discharging waste heat from a room,

wherein at least one of the compressed air components, namely a refrigeration dryer, is connected to the exhaust air duct (13), and wherein a further compressed air component (11) is connected to the same exhaust air duct (13), wherein a compressed air refrigeration heat exchanger (23) is provided within the refrigeration dryer (12), in which the compressed air is cooled by way of a refrigerant conducted in a refrigerant circuit (24), wherein the refrigerant circuit (24) comprises a refrigerant compressor (25), a condenser (26), an expansion valve (27) and the compressed air refrigeration heat exchanger (23),
wherein the compressed air station further comprises a dryer exhaust air duct (15), which is provided for discharging from the refrigeration dryer (12) a cooling air flow that is conducted through the refrigeration dryer (12), and which connects a cooling air outlet (19) of the refrigeration dryer (12) to a refrigeration dryer connection (16) on the exhaust air duct (13),
wherein the refrigeration dryer (12) has a fan (20) with a speed-adjustable fan motor (21), and the fan (20) is designed to convey the cooling air flow even against a backpressure currently prevailing in the exhaust air duct (13),
and wherein the refrigeration dryer (12) has a controller or interacts with a controller, which is configured and designed to actuate the speed-adjustable fan motor (21) of the fan in such a way that the fan (20) compensates for the backpressure prevailing in the exhaust air duct (13), so that a volume transported by the cooling air flow per unit of time remains unchanged.

2. Compressed air station according to claim 1, **characterized in that**
the refrigeration dryer (12) has a pressure sensor (28) for detecting a value representative of the current condensation pressure $p_{c,act}$ within the condenser (26), and **in that** the controller (22) is configured and designed to record and process the data from the pressure sensor (28) and to actuate the speed-adjustable fan motor (21) of the fan (20) accordingly by adjusting the condensation pressure $p_c$ or the condensation temperature $T_c$ to a setpoint pressure for the condensation pressure $p_{c,soll}$ or a setpoint temperature for the condensation temperature $T_{c,soll}$ such that a volume transported by the cooling air flow per unit of time remains unchanged, regardless of the current backpressure in the exhaust air duct (13).

3. Compressed air station according to claim 1 or 2, **characterized in that**
a screw compressor (11) and the refrigeration dryer (12) are connected to one another via a compressed air line (14), and the compressed air line (14) is designed to transfer the compressed air output by the screw compressor (11) to the refrigeration dryer (12) for drying purposes, wherein a cooling air outlet (18) of the screw compressor (11) is connected via a compressor connection (17) to the exhaust air duct (13), to which the refrigeration dryer (12) is also connected.

4. Compressed air station according to claim 1 to 3, **characterized in that**
the fan (20) of the refrigeration dryer (12) is designed as a radial fan.

5. Compressed air station according to any one of claims 1 to 3, **characterized in that**
the controller (22) interacts with an ambient air sensor, preferably a temperature sensor (42), for detecting a value representative of the state of the supply air, in particular a value representative of the supply air temperature, and transmitting it to the controller.

6. Compressed air station according to any one of claims 1 to 5, **characterized in that**
an exhaust air damper (29) is arranged in the dryer exhaust air duct (15), which damper is designed and configured to close the dryer exhaust air duct (15) when the refrigerant compressor (25) is idle.

7. Compressed air station according to claim 6, **characterized in that**
the exhaust air damper (29) is designed as a gravity-operated exhaust air damper, which opens whenever the fan (20) is conveying the cooling air flow through the dryer exhaust air duct (15) and closes whenever the fan (20) is idle.

8. Compressed air station according to claim 6, **characterized in that**
the exhaust air damper (29) interacts with a drive motor (39), wherein the drive motor (39) is actuated by the controller (22) in such a way that the exhaust air damper (29) is opened or closed depending on the operating state of the fan (20).

9. Method for actuating a speed-adjustable fan motor (21) of a fan (20) of a refrigeration dryer (12) within a compressed air station, wherein the compressed air station comprises at least two compressed air components that yield waste heat, wherein each compressed air component is designed either as a compressor, in particular as a screw compressor, or as a refrigeration dryer, and at least one exhaust air duct (13) for discharging waste heat from a room, wherein at least one of the compressed air components, namely a refrigeration dryer (12), is connected to the exhaust air duct (13), and wherein a further compressed air component is connected to the same exhaust air duct (13),

wherein a compressed air refrigeration heat exchanger (23) is provided within the refrigeration dryer (12), in which the compressed air is cooled by way of a refrigerant conducted in a refrigerant circuit (24), wherein the refrigerant circuit (24) comprises a refrigerant compressor (25), a condenser (26), an expansion valve (27) and the compressed air refrigeration heat exchanger (23),
wherein the compressed air station further comprises a dryer exhaust air duct (15), which is provided for discharging a cooling air flow that is conducted through the refrigeration dryer (12), and which connects a cooling air outlet (19) of the refrigeration dryer (12) to a refrigeration dryer connection (16) on the exhaust air duct (13), wherein the refrigeration dryer (12) has a fan (20) with a speed-adjustable fan motor (21), and the fan (20) is designed to convey the cooling air flow even against a backpressure currently prevailing in the exhaust air duct (13), and wherein the compressed air station, in particular the refrigeration dryer, has a controller (22) or interacts with a controller, which is configured and designed to actuate the speed-adjustable fan motor (21) of the fan (20) in such a way that the fan compensates for the backpressure prevailing in the exhaust air duct, so that a volume transported by the cooling air flow per unit of time remains unchanged.

10. Method according to claim 9,
    **characterized in that**
    the method further comprises the following steps:

    - reading in a value representative of the current condensation pressure $p_{c, act}$ currently prevailing within the condenser (26),
    - calculating a current condensation temperature $T_{c, act}$ from the value of the current condensation pressure $p_{c, act}$,
    - reading in a value representative of the temperature of the supply air, which defines a supply air temperature $T_{amb}$,
    - calculating a setpoint for the condensation temperature $T_{c, soll}$ in defined dependence on the supply air temperature $T_{amb}$, and
    - actuating the fan motor (21) of the fan (20) in such a way that the current condensation temperature $T_{c, act}$ follows the setpoint for the condensation temperature $T_{c, soll}$.

11. Method according to claim 9 or 10,
    **characterized in that**,
    for calculating the setpoint for the condensation temperature $T_{c, soll}$ in the case of supply air temperatures below a limit temperature $T_{0, amb}$, a dryer-specific, constant minimum temperature $T_{fix}$ is defined as the setpoint for the condensation temperature $T_{c, soll}$.

12. Method according to any one of claims 9 to 11,
    **characterized in that**
    the setpoint for the condensation temperature $T_{c, soll}$ at supply air temperatures above a limit temperature $T_{0, amb}$ results from the supply air temperature $T_{amb}$ with a dryer-specific supplement $\Delta T$.

13. Method according to any one of claims 9 to 12,

**characterized in that**
the setpoint for the condensation temperature $T_{c, soll}$ results from the following formula

$$T_{c, soll} = \max \left[ T_{amb} + \Delta T \text{ or } T_{fix} \right],$$

where $T_{amb}$ denotes the supply air temperature, $\Delta T$ denotes a dryer-specific supplement, and $T_{fix}$ denotes a dryer-specific, constant minimum temperature.

14. Method according to any one of claims 9 to 13,
    **characterized in that**
    a PID controller, a PI controller, a deadband controller or a three-point controller is used to actuate the fan motor (21) of the fan (20) in order to bring $T_{c, act}$ towards $T_{c, soll}$, wherein a control deviation e results from $T_{c, soll} - T_{c, act}$, and wherein $T_{c, soll}$ denotes the setpoint for the condensation temperature and $T_{c, act}$ denotes the current condensation temperature.

**Revendications**

1. Station d'air comprimé comprenant au moins deux composants d'air comprimé fournissant de la chaleur perdue, sachant que le composant d'air comprimé respectif est constitué soit comme compresseur, en particulier comme compresseur à vis, soit comme sécheur frigorifique, ainsi qu'au moins un conduit d'échappement (13) destiné à évacuer de la chaleur perdue d'un espace,

    sachant qu'au moins un des composants d'air comprimé, en particulier un sécheur frigorifique (12), est raccordé au conduit d'échappement (13), et
    sachant qu'un composant d'air comprimé (11) supplémentaire est raccordé au même conduit d'échappement (13),
    sachant qu'un échangeur de chaleur de réfrigérant d'air comprimé (23) dans lequel l'air comprimé est refroidi via un fluide réfrigérant guidé dans un circuit de fluide réfrigérant (24) est prévu à l'intérieur du sécheur frigorifique (12), sachant que le circuit de fluide réfrigérant (24) comprend un compresseur de fluide réfrigérant (25), un condenseur (26), une vanne de détente (27) et l'échangeur de chaleur de réfrigérant d'air comprimé (23),
    sachant que la station d'air comprimé comprend en outre un conduit d'échappement de sécheur (15) qui est prévu pour évacuer un flux d'air de refroidissement guidé à travers le sécheur frigorifique (12) et relie une sortie d'air de refroidissement (19) du sécheur frigorifique (12) à un raccord de sécheur frigorifique (16) au niveau du conduit d'échappement (13),
sachant que le sécheur frigorifique (12) présente un ventilateur (20) avec un moteur de ventilateur (21) réglable en vitesse de rotation et le ventilateur (20) est constitué pour refouler le flux d'air de refroidissement y compris contre une contrepression régnant actuellement dans le conduit d'échappement (13),
et sachant que le sécheur frigorifique (12) présente une commande ou interagit avec une commande qui est configurée et constituée pour piloter le moteur de ventilateur (21) réglable en vitesse de rotation du ventilateur de telle manière que le ventilateur (20) équilibre la contrepression régnant dans le conduit d'échappement (13) de telle sorte qu'un volume transporté par le flux d'air de refroidissement par unité de temps reste inchangé.

2. Station d'air comprimé selon la revendication 1,
**caractérisée en ce que**
le sécheur frigorifique (12) présente un capteur de pression (28) destiné à saisir une valeur représentative d'une pression de condensation actuelle $p_{c,\,act}$ à l'intérieur du condenseur (26) et **en ce que** la commande (22) est configurée et constituée pour saisir et traiter les données du capteur de pression (28) et piloter en conséquence le moteur de ventilateur (21) réglable en vitesse de rotation du ventilateur (20) via une régulation de la pression de condensation $p_c$ ou de la température de condensation $T_c$ à une pression définie pour la pression de condensation $p_{c,\,soll}$ ou une température définie pour la température de condensation $T_{c,\,soll}$ de telle sorte qu'un volume transporté par le flux d'air de refroidissement par unité de temps reste inchangé indépendamment de la contrepression actuelle dans le conduit d'échappement (13).

3. Station d'air comprimé selon la revendication 1 ou 2,
**caractérisée en ce que**
un compresseur à vis (11) et le sécheur frigorifique (12) sont reliés l'un à l'autre via une conduite d'air comprimé (14) et la conduite d'air comprimé (14) est constituée pour transférer l'air comprimé délivré par le compresseur à vis (11) au sécheur frigorifique (12) à des fins de séchage, sachant qu'une sortie d'air de refroidissement (18) du compresseur à vis (11) est raccordée via un raccord de compresseur (17) au conduit d'échappement (13) auquel le sécheur frigorifique (12) est également raccordé.

4. Station d'air comprimé selon les revendications 1 à 3,
**caractérisée en ce que**
le ventilateur (20) du sécheur frigorifique (12) est constitué comme ventilateur radial.

5. Station d'air comprimé selon l'une des revendications 1 à 3,
**caractérisée en ce que**
la commande (22) interagit avec un capteur d'air ambiant, de préférence un capteur de température (42) pour saisir et transmettre à la commande une valeur représentative de l'état de l'air entrant, en particulier de la température d'air entrant.

6. Station d'air comprimé selon l'une des revendications 1 à 5,
**caractérisée en ce que**
un clapet d'air d'échappement (29) qui est constitué et configuré pour fermer le conduit d'échappement de sécheur (15) à l'arrêt du compresseur de fluide réfrigérant (25) est disposé dans le conduit d'échappement de sécheur (15).

7. Station d'air comprimé selon la revendication 6,
**caractérisée en ce que**
le clapet d'air d'échappement (29) est constitué comme clapet d'air d'échappement actionné par la pesanteur qui s'ouvre dans la mesure où le ventilateur (20) refoule le flux d'air de refroidissement par le conduit d'échappement de sécheur (15) et se ferme dans la mesure où le ventilateur (20) est à l'arrêt.

8. Station d'air comprimé selon la revendication 6,
**caractérisée en ce que**
le clapet d'air d'échappement (29) interagit avec un moteur d'entraînement (39), sachant que le moteur d'entraînement (39) est piloté par la commande (22) de telle manière que le clapet d'air d'échappement (29) soit ouvert ou fermé en fonction de l'état de fonctionnement du ventilateur (20).

9. Procédé de pilotage d'un moteur de ventilateur (21) réglable en vitesse de rotation d'un ventilateur (20) d'un sécheur frigorifique (12) à l'intérieur d'une station d'air comprimé, sachant que la station d'air comprimé comprend au moins deux composants d'air comprimé fournissant de la chaleur perdue, sachant que le composant d'air comprimé respectif est constitué soit comme compresseur, en particulier comme compresseur à vis, soit comme sécheur frigorifique, ainsi qu'au moins un conduit d'échappement (13) destiné à évacuer de la chaleur perdue d'un espace, sachant qu'au moins un des composants d'air comprimé, en particulier un sécheur frigorifique (12), est raccordé au conduit d'échappement (13), et sachant qu'un composant d'air comprimé supplémentaire est raccordé au même conduit d'échappement (13),

sachant qu'un échangeur de chaleur de réfrigérant d'air comprimé (23) dans lequel l'air comprimé est refroidi via un fluide réfrigérant guidé dans un circuit de fluide réfrigérant (24) est prévu à l'intérieur du sécheur frigorifique, sachant que le circuit de fluide réfrigérant (24) comprend un compresseur de fluide réfrigérant (25), un condenseur (26), une vanne de détente (27) et l'échangeur de chaleur de réfrigérant d'air comprimé (23),

sachant que la station d'air comprimé comprend en outre un conduit d'échappement de sécheur (15) qui est prévu pour évacuer un flux d'air de refroidissement guidé à travers le sécheur frigorifique (12) et relie une sortie d'air de refroidissement (19) du sécheur frigorifique (12) à un raccord de sécheur frigorifique (16) au niveau du conduit d'échappement (13),

sachant que le sécheur frigorifique (12) présente un ventilateur (20) avec un moteur de ventilateur (21) réglable en vitesse de rotation et le ventilateur (20) est constitué pour refouler le flux d'air de refroidissement y compris contre une contrepression régnant actuellement dans le conduit d'échappement (13), et sachant que la station d'air comprimé, en particulier le sécheur frigorifique, présente une commande ou interagit avec une commande qui est configurée et constituée pour piloter le moteur de ventilateur (21) réglable en vitesse de rotation du ventilateur (20) de telle manière que le ventilateur (20) équilibre la contrepression régnant dans le conduit d'échappement de telle sorte qu'un volume transporté par le flux d'air de refroidissement par unité de temps reste inchangé.

10. Procédé selon la revendication 9, **caractérisé en ce que**
le procédé comprend en outre les étapes suivantes :

- lecture d'une valeur représentative de la pression de condensation actuelle $p_{c, act}$ qui règne actuellement à l'intérieur du condenseur (26),
- calcul d'une température de condensation actuelle $T_{c, act}$ à partir de la valeur de la pression de condensation actuelle $p_{c, act}$,
- lecture d'une valeur représentative de la température de l'air entrant qui définit une température d'air entrant $T_{amb}$,
- calcul d'une valeur définie pour la température de condensation $T_{c, soll}$ en fonction définie de la température d'air entrant $T_{amb}$ et
- pilotage du moteur de ventilateur (21) du ventilateur (20) de telle manière que la température de condensation actuelle $T_{c, act}$ suive la valeur définie pour la température de condensation $T_{c, soll}$.

11. Procédé selon la revendication 9 ou 10, **caractérisé en ce que**
pour le calcul de la valeur définie pour la température de condensation $T_{c, soll}$ en cas de températures de l'air entrant inférieures à une température limite $T_{0,amb}$, une température minimale constante $T_{fix}$ spécifique au sécheur soit définie comme valeur définie pour la température de condensation $T_{c, soll}$.

12. Procédé selon l'une des revendications 9 à 11, **caractérisé en ce que**
en cas de températures de l'air entrant supérieures à une température limite $T_{0,amb}$, la valeur définie pour la température de condensation $T_{c, soll}$ résulte de la température d'air entrant $T_{amb}$ avec une majoration $\Delta T$ spécifique au sécheur.

13. Procédé selon l'une des revendications 9 à 12, **caractérisé en ce que**
la valeur définie pour la température de condensation $T_{c, soll}$ résulte de la formule suivante

$$T_{c, soll} = \max\ [T_{amb} + \Delta T \text{ ou } T_{fix}],$$

sachant que $T_{amb}$ désigne la température d'air entrant, $\Delta T$ une majoration spécifique au sécheur et $T_{fix}$ une température minimale constante spécifique au sécheur.

14. Procédé selon l'une des revendications 9 à 13, **caractérisé en ce que**
pour le pilotage du moteur de ventilateur (21) du ventilateur (20), afin d'approximer $T_{c, act}$ à $T_{c, soll}$, un régulateur PID, un régulateur PI, une régulation de bande interdite ou une régulation à trois points est mis en œuvre, sachant qu'un écart de régulation e résulte de $T_{c, soll} - T_{c, act}$ et sachant que $T_{c, soll}$ désigne la valeur définie pour la température de condensation et $T_{c, act}$ la température de condensation effective.

**Figur 1**

**Figur 2**

**Figur 3**

16

**Figur 4**

**Figur 5**

**Figur 6**

Kältetrockner starten

100

102

101

| Ventilator mit Mindestdrehzahl starten | Kälteleistungsbedarf ermittelt → Kältekreislauf starten |

103

| Signal einlesen: Kondensationsdruck **Pc** | Signal einlesen: Temperatur Zuluft **Tamb** |

104

105

106

| Berechnen: Kondensationstemperatur **Tc** **Tc = f(pc)** | Berechnen: Sollwert Kondensationstemperatur **Tc soll** **Tc soll = max [Tamb + Δ T** ODER **25 °C*]** |

Regelabweichung **e** berechnen

**e = Tc soll - Tc**

PID Regler

Neue Lüftermotorsolldrehzahl bestimmen

107

Drehzahlsignal an Lüftermotor senden

108

**Figur 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014000541 A1